# NOUVEAU FASCICULE DE BREVET EUROPEEN

(11) **EP 0 122 853 B2**
(45) Date de publication et mention de la décision concernant l'opposition: **13.12.1995**
(45) Mention de la délivrance du brevet: 22.08.1990
(21) Numéro de dépôt: 84400709.6
(22) Date de dépôt: 10.04.1984
(51) Int. Cl.: B60R 25/02, B62D 1/16

(54) **Axe de volant pour colonne de direction de véhicule automobile**
Lenkradschaft für Lenksäule eines Kraftfahrzeuges
Steering wheel shaft for the steering column of a motor vehicle

(30) Priorité: 15.04.1983 FR 8306232
(43) Date de publication de la demande: 24.10.1984
(73) Titulaire: ECIA - EQUIPEMENTS ET COMPOSANTS POUR L'INDUSTRIE AUTOMOBILE, F-25400 Audincourt (FR)
(72) Inventeur: Barnabe, Jean-Pierre, 25700 Valentigney (FR); Clerc, Michel, 25700 Valentigney (FR); Mouhot, Frédéric, 25420 Voujeaucourt (FR)
(74) Mandataire: Moncheny, Michel

(56) Documents cités:
- EP-A- 0 076 214
- DE-A- 2 026 339
- DE-A- 2 256 726
- FR-A- 2 204 256
- FR-A- 2 369 027
- US-A- 2 067 283
- US-A- 4 213 351
- "Maschinenmarkt", 89. Jahrgang, Heft 3 (Vogel-Verlag, Würzburg)

## Description

La présente invention concerne un axe de volant pour colonne de direction de véhicule automobile.

En effet, pour satisfaire aux normes de sécurité, les colonnes de direction sont actuellement réalisées en deux parties articulées entre elles et comportent ainsi un axe de volant reliant le volant à un joint du type cardan, et un axe de direction allant de ce joint de cardan au boîtier de direction des roues avant.

On connaît déjà d'après le document EP-A1-0 076 214, un axe de volant pour colonne de direction de véhicule, formé d'un tube d'une seule pièce dont l'épaisseur de paroi et le diamètre varient sur sa longueur, ledit axe étant formé alternativement de portions cylindriques et de portions coniques et comportant une extrémité étroite de fixation du volant ayant une paroi épaissie et une portion cylindrique intermédiaire de plus grand diamètre munie d'une fente formant gâche de verrouillage.

L'axe de volant doit remplir trois fonctions. Il doit recevoir un volant afin d'en transmettre la rotation au boitier de direction, assurer l'articulation c'est à dire porter une fourche du joint de cardan, et être capable de coopérer avec un verrou d'antivol de façon à assurer l'immobilisation en rotation du volant. Ces trois fonctions sont généralement remplies par trois pièces différentes, de sorte que l'axe de volant comporte une tige, ou tube, dont l'une des extrémités est conformée en vue de la réception du volant, et sur laquelle sont montés une fourche de cardan et un manchon percé d'une fente et formant gâche de verrouillage.

Une telle construction présente l'inconvénient d'être compliquée à fabriquer. Les tentatives de simplification se sont heurtées aux exigences de poids, les organes d'un véhicule devant être les plus légers possible et présenter le plus faible encombrement possible. Or, le manchon de verrouillage doit obligatoirement avoir un diamètre relativement important et être suffisamment épais pour coopérer avec le verrou et résister aux efforts de cisaillement exercés par celui-ci.

La présente invention a pour but de résoudre ce problème en réalisation un axe de volant d'une seule pièce qui, à la fois, soit susceptible de remplir les trois fonctions ci-dessus et de résister aux efforts de verrouillage, sans présenter un poids prohibitif.

Cette invention a en effet pour objet un axe de volant pour colonne de direction de véhicule automobile formé d'un tube d'une seule pièce dont l'épaisseur de paroi et le diamètre varient sur sa longueur, ledit axe étant formé alternativement de portions cylindriques et de portions coniques et comportant une extrémité étroite de fixation du volant ayant une paroi épaissie et une portion cylindrique intermédiaire de plus grand diamètre munie d'une fente formant gâche de verrouillage, caractérisé en ce que son autre extrémité est élargie et forme une fourche de cardan, et en ce que les diamètres des portions cylindriques et coniques sont décroissants de l'extrémité élargie à l'extrémité étroite.

Un tel tube combine ainsi les qualités de résistance aux efforts auxquels il est soumis, et de légèreté exigées d'un organe de ce type.

La description ci-dessous d'un mode de réalisation à titre d'exemple non limitatif, et représenté aux dessins annexés, fera d'ailleurs ressortir les avantages et caractéristiques de l'invention. Sur ces dessins :
- la Fig.1 est une vue en perspective d'un axe de volant selon l'invention;
- la Fig.2 est une vue en coupe axiale de ce même tube.

L'axe de volant représenté est constitué d'une seule pièce par un tube 1, dont l'une des extrémités est élargie et fendue pour former les deux branches 2 et 4 d'une fourche 5 de cardan. Dans les braches 2 et 4 de ce cardan sont tirés des canons 24 et 24' qui permettront le montage d'un croisillon et de douilles et qui, en outre, augmentent la résistance de la fourche en torsion et en flexion. Ces canons sont réalisés, par exemple, par fluoperçage et, de toutes façons, sans apport de matière.

A son extrémité opposée, le tube est conformé de façon à permettre le support du volant. Par exemple, dans le mode de réalisation représenté, ce tube est terminé par une partie 6 de petit diamètre, filetée extérieurement pour permettre le montage d'un écrou de maintien du volant. La partie filetée 6 est suivie par une portion tronconique 8 reliée à une partie cylindrique cannelée 9 permettant de transmettre le couple de rotation.

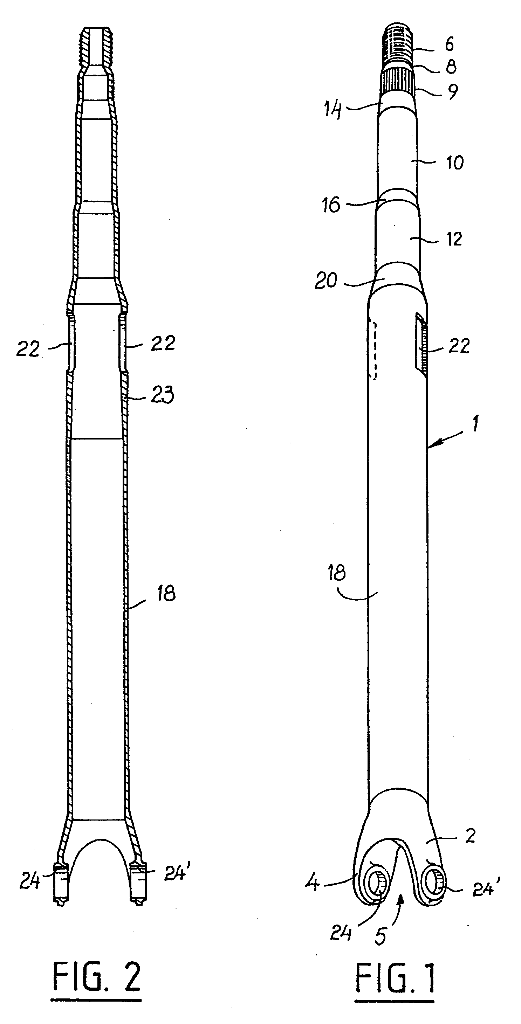

Le tube 1 comporte ensuite au moins une portion cylindrique de plus grand diamètre que la partie cannelée 9 et, dans le mode de réalisation, deux portions cylindriques, respectivement 10 et 12, qui sont reliées entre elles et à la partie cannelée 9 par des troncs de cône, respectivement 14 et 16, le cône 14 jouant le rôle de butée d'appui du volant. Par ailleurs, le corps principal du tube 1 est constitué par une portion cylindrique 18 de plus grand diamètre que les précédentes, qui, au voisinage d'un cône 20 de liaison aux portions cylindriques 12 et 10, est percée d'au moins une fente longitudinale 22, ou éventuellement de deux fentes diamétralement opposées comme le montre la figure 2.

Les différentes parties du tube 1 ont des parois d'épaisseurs différentes. Ainsi, comme le montre la figure 2, le tube cylindrique 18 a une épaisseur relativement faible par rapport à celle des branches 2 et 4 de la fourche de cardan ou à celle de la portion 23 de ce tube qui est percée des fentes 22. En outre, les cylindres 10 et 12 de même que les parties cannelée 9 et filetée 6 ont des parois encore plus épaisses. Grâce à cette disposition le tube ne présente qu'un poids relativement faible tout en ayant une résistance importante, et notamment une résistance au cisaillement suffisante au voisinage des fentes de verrouillage 22.

De préférence, l'axe de volant est réalisé à partir d'un tube cylindrique d'épaisseur de paroi constante et de diamètre constant, qui est d'abord déformé ou plus exactement élargi et fendu pour réaliser les deux branches 2 et 4 de la fourche 5 sans modifier l'épaisseur du tube initial. Ce tube 1 est ensuite étiré de façon à allonger la partie destinée à constituer le cylindre 18 en amincissant sa paroi, la zone destinée à former le cylindre 23 percé des fentes 22 conservant pratiquement son épaisseur de paroi initiale, de sorte que ces fentes peuvent être pratiquées dans un tube présentant une résistance importante. Le tube ainsi conformé est muni d'une extrémité de support du volant grâce à une opération de rétraint étirant sa paroi tout en la soumettant à une compression latérale qui allonge le tube en accroissant l'épaisseur de sa paroi. L'étirement, de même que la compression, sont différents dans les différentes zones 12, 10, 9 et 6 du tube métallique.

L'axe de volant ainsi obtenu a des résistances variables dans ses différentes parties. L'extrémité étroite ayant une épaisseur importante supporte facilement le volant qui est monté sur elle. La portion 23 de grand diamètre et d'épaisseur moyenne résiste aux efforts de cisaillement exercés par le verrou, tandis que la partie cylindrique 18 de faible épaisseur joue essentiellement le rôle de transmission du déplacement en rotation du volant à la fourche 5 du cardan.

On constate que malgré la réduction d'épaisseur et la déformation qu'a subie le tube initial 1, c'est-à-dire notamment un allongement qui peut atteindre 50%, l'axe de volant réalisé fournit, lors d'essais en torsion, des résultats plus favorables que les axes de volant en trois pièces actuellement réalisés. En outre, la partie 23 percée des fentes 22 présente une résistance au cisaillement nettement supérieure à celle exigée par les normes de sécurité.

Cet axe de volant d'une seule pièce répond ainsi aux exigences de la pratique en étant d'une fabrication simple et peu coûteuse.

Bien que l'axe ait été représenté avec une extrémité de support du volant comportant une partie filetée 6 suivie d'une portion cannelée 9, il est bien évident que ceci n'est donné qu'à titre indicatif et que cette partie extrême du volant pourrait être constituée par une portion cylindrique de diamètre constant, la fixation du volant étant effectuée par soudage ou par tout autre moyen approprié.

## Revendications

1. Axe de volant pour colonne de direction de véhicule automobile formé d'un tube (1) d'une seule pièce dont l'épaisseur de paroi et le diamètre varient sur sa longueur, ledit axe étant formé alternativement de portions cylindriques (9,10,12,18) et de portions coniques (8,14,16,20) et comportant une extrémité étroite (6) de fixation du volant ayant une paroi épaissie et une portion cylindrique intermédiaire (23) de plus grand diamètre munie d'une fente (22) formant gâche de verrouillage, caractérisé en ce que son autre extrémité (2,4) est élargie et forme une fourche de cardan (5), et en ce que les diamètres des portions cylindriques et coniques sont décroissants de l'extrémité élargie à l'extrémité étroite.

2. Axe de volant suivant la revendication 1, caractérisé en ce que le tube comporte deux fentes (22) diamétralement opposées.

3. Axe de volant suivant l'une des revendications 1 et 2, caractérisé en ce que le tube (1) comporte une partie cylindrique (18) à paroi amincie entre la fourche (5) de cardan et la portion (23) voisine des fentes (22).

4. Axe de volant suivant l'une des revendications précédentes, caractérisé en ce qu'il est réalisé à partir d'un tube (1) cylindrique, de diamètre et d'épaisseur constants.

5. Axe de volant suivant l'une des revendications précédentes, caractérisé en ce que la fourche (5) formée à l'une des extrémités du tube comporte, dans chacune de ses branches (2,4), des canons (24,24') destinés au montage du croisillon et de ses douilles et au renforcement de la solidité de la fourche, ces canons étant venus de matière dans les branches elles-mêmes.

## Claims

1. A steering wheel shaft for a motor vehicle steering column formed by a one-piece tube (1) whose wall thickness and diameter vary over its length, said axis being formed alternately by cylindrical portions (9, 10, 12, 18) and conical portions (8, 14, 16, 20) and comprising a narrow end portion (6) for fixing the steering wheel with a thickened wall and an intermediate cylindrical portion (23) with a larger diameter provided with a slot (22) forming a locking keeper, characterised in that its other end portion (2, 4) is enlarged and forms a universal joint yoke (5), and that the diameters of the cylindrical and conical portions decrease from the enlarged end portion to the narrow end portion.

2. A steering wheel shaft according to Claim 1, characterised in that the tube comprises two diametrically opposed slots (22).

3. A steering wheel shaft according to one of Claims 1 and 2, characterised in that the tube (1) comprises a cylindrical portion (18) having a reduced wall thickness between the universal joint yoke (5) and the portion (23) adjacent to the slots (22).

4. A steering wheel shaft according to one of the preceding claims, characterised in that it is made from a cylindrical tube (1) whose diameter and thickness are constant.

5. A steering wheel shaft according to one of the preceding claims, characterised in that the yoke (5) formed at one of the ends of the tube comprises in each of its branches (2, 4) spigots (24, 24') for the mounting of the spider element and its bushes and for reinforcing the strength of the yoke, the spigots being formed from the material of the arms themselves.

## Patentansprüche

1. Lenkradschaft für eine Lenksäule eines Kraftfahrzeugs, der durch ein einteiliges Rohr (1) gebildet wird, dessen Wanddicke und dessen Durchmesser sich über seine Länge hin ändern, wobei der Schaft durch abwechselnd zylindrische Abschnitte (9, 10, 12, 18) und konische Abschnitte (8, 14, 16, 20) gebildet ist und ein verschmälertes Ende (6) zur Befestigung des Lenkrads aufweist, wobei das Ende (6) eine verdünnte Seitenwand aufweist, und mit einem zylindrischen Zwischenbereich (23) größeren Durchmessers, der mit einem Spalt (22) versehen ist, der eine Eingriffsöffnung bildet,
**dadurch gekennzeichnet, daß**
das andere Ende (2, 4) verbreitert ist und die Gabel eines Kardangelenks (5) bildet, und dadurch, daß die Durchmesser der zylindrischen und der konischen Bereiche vom verbreiterten Ende zum verschmälerten Ende hin abnehmen.

2. Lenkradschaft nach Anspruch 1, dadurch gekennzeichnet, daß das Rohr zwei Spalten (22) aufweist, die einander diametral gegenüberliegen.

3. Lenkradschaft nach einem der Ansprüche 1 oder 2, dadurch gekennzeichnet, daß das Rohr (1) einen zylindrischen Abschnitt (18) mit einer verdünnten Wandung zwischen der Gabel (5) des Kardangelenks und dem Abschnitt (23), der nahe an den Spalten (22) liegt, aufweist.

4. Lenkradschaft nach einem der vorhergehenden Ansprüche, dadurch gekennzeichnet, daß er ausgehend von einem zylindrischen Rohr (1) konstanten Querschnitts und konstanter Wanddicke gebildet wird.

5. Lenkradschaft nach einem der vorhergehenden Ansprüche, dadurch gekennzeichnet, daß die am einen Ende des Rohres ausgebildete Gabel (5) an jedem ihrer Arme (2, 4) Lager (24, 24') zur Montage eines Kreuzzapfens sowie dessen Hülsen sowie zur Verstärkung der Festigkeit der Gabel aufweist, wobei die Lager aus demselben Material wie die Arme selbst hergestellt sind.
